# EUROPEAN PATENT APPLICATION

(11) **EP 4 283 810 A1**
(43) Date of publication of application: **29.11.2023**
(21) Application number: 22174869.2
(22) Date of filing: 23.05.2022
(51) Int. Cl.: H02J 3/14, H02J 3/28, H02J 15/00

(54) **METHOD FOR CONTROLLING A POWER OUTPUT OF A RENEWABLE HYDROGEN POWER PLANT, COMPUTER PROGRAM PRODUCT, CONTROL SYSTEM AND RENEWABLE HYDROGEN SYSTEM**

(71) Applicant: Siemens Gamesa Renewable Energy A/S, 7330 Brande (DK)
(72) Inventor: Chaudhary, Abhishek, 7330 Brande (DK); Serup, Mikkel, 7330 Brande (DK)
(74) Representative: SGRE-Association

(57) **Abstract**

A method for controlling a power output (P_{P}) of a renewable hydrogen power plant (2) to an electrical grid (4), the plant (2) comprising a renewable energy generation facility (5), a hydrogen production facility (6), and a storage facility (7), and the method comprising the steps:
determining (S2) that a frequency value (F) of the electrical grid (4) differs from a nominal frequency value (N),
sending (S3) a first control signal (A) depending on the received frequency value (F) to the storage facility (7) to discharge or charge the storage facility (7), and
sending (S4) a second control signal (B) depending on the received frequency value (F) to the hydrogen production facility (6) to reduce a hydrogen production or to the renewable energy generation facility (5) to reduce a generation of electrical power (P_{RE}).

By first controlling the storage facility, a fast frequency regulation of the electrical grid is possible.

## Description

The present invention relates to a method for controlling a power output of a renewable hydrogen power plant, a computer program product, a control system and a renewable hydrogen system.

Renewable hydrogen (also called green hydrogen or clean hydrogen) is hydrogen produced by using renewable energy. It is a clean and versatile energy carrier which can be used as an alternative to fossil fuels. Renewable hydrogen can be produced by a renewable hydrogen power plant comprising both a renewable energy generation facility (e.g., a wind farm or a photovoltaic farm) and a hydrogen production facility. A hydrogen production facility includes, for example, an electrolyzer for converting the generated electrical energy into hydrogen. The renewable hydrogen power plant may deliver electrical power to an electrical grid as well as provide hydrogen (e.g., hydrogen gas). A renewable hydrogen power plant has to comply with frequency regulation requirements of the electrical grid and can also participate in the power ancillary service market. Power market ancillary services include services needed for maintaining the secure and stable operation of the electrical grid by ensuring power supply and by meeting voltage, frequency quality and other requirements.

It is one object of the present invention to provide a method, a computer program product, a control system and a renewable hydrogen system for an improved controlling of a power output of a renewable hydrogen power plant.

According to a first aspect, a method for controlling a power output of a renewable hydrogen power plant to an electrical grid is provided. The renewable hydrogen power plant comprises a renewable energy generation facility, a hydrogen production facility, and a storage facility. Further, the method comprises the steps of:
a) receiving a frequency value of the electrical grid,
b) determining that the received frequency value differs from a nominal frequency value of the electrical grid,
c) sending a first control signal depending on the received frequency value to the storage facility to discharge or charge the storage facility, and
d) sending a second control signal depending on the received frequency value to the hydrogen production facility to reduce a hydrogen production or to the renewable energy generation facility to reduce a generation of electrical power.

Thus, a frequency of the electrical grid can be regulated by the renewable hydrogen power plant by means of providing additional power to the grid in a low-frequency event and by reducing an amount of provided power to the electrical grid in high-frequency event.

In particular, in response to a deviation of the actual frequency from a nominal frequency of the electrical grid, firstly the storage facility is discharged or charged. As discharging and charging the storage facility can be performed quickly, a fast reaction to a low- or high-frequency event of the electrical grid is possible. As a further response to said frequency deviation, the production of electrical energy or of hydrogen by the renewable hydrogen power plant is adjusted. By reducing the generation of electrical energy, the power output of the plant can be reduced. Further, by reducing the production of hydrogen, the power output of the plant can be increased.

The electrical grid is an interconnected network for electricity delivery from producers to consumers. The frequency of the electrical grid (also called utility frequency) is the frequency of the oscillations of alternating current (AC) of the electrical grid. Usually, the current is transmitted through the grid with a synchronized frequency from a power station to the end-user. In large parts of the world including Europe, the nominal frequency of the electrical grid is 50 Hz. In USA and parts of Asia, the nominal frequency of the electrical grid is 60 Hz.

Operation of a large electrical grid at nearly constant frequency is important for the power generators of the grid to remain synchronized. When the amount of electricity consumed from the grid changes, generator output to the grid must be controlled to follow the load. For instance, if the load increases faster than a turbine generator can respond, the generator slows down, momentarily operating at lower frequency. If the load changes are severe, other generators of the grid may not remain synchronized and a widespread power outage may occur.

Frequency regulation of an electrical grid is provided by power generators feeding into the grid as an ancillary service to improve the stability of the grid. A power plant may sell the frequency regulation service to the grid operator in addition to selling electricity by operating slightly below peak power so that it may regulate up or down. To provide this service effectively the power plant must be able to increase or decrease the power output quickly, responding to a control signal from the grid operator that may change every few seconds or less.

Adjusting the power generation of a wind farm or a photovoltaic farm is a slow process. Further, also adjusting the power consumption of a hydrogen production facility can usually be performed only slowly. However, using the storage facility in addition and as a first reaction to a low- or high-frequency event of the grid, the power output of a renewable hydrogen power plant can be adjusted quickly.

The received frequency value is, in particular, the actual frequency of the electrical grid.

The nominal frequency is, for example, 50 Hz or 60 Hz.

The renewable energy generation facility is, in particular, configured for generating electrical energy (electrical power) from renewable energy such as wind power and/or photovoltaic.

The hydrogen production facility is, in particular, configured for producing hydrogen (e.g., hydrogen gas) from (e.g., a portion of) the electrical power generated by the renewable energy generation facility. The hydrogen production facility comprises, for example, one or more electrolytic hydrogen production units for producing hydrogen gas from electrical power. The electrolytic hydrogen production unit converts, for example, water into hydrogen gas by using the electrical current produced by one or more generators of the renewable energy generation facility. Thereby, water is separated into hydrogen and oxygen by an electrolysis process in the hydrogen production unit. The renewable hydrogen power plant may, for example, also comprise one or more hydrogen tanks for storing the produced hydrogen.

The storage facility is, in particular, configured for storing a portion of the electrical power generated by the renewable energy generation facility.

The renewable hydrogen power plant is, in particular, configured to deliver electrical power as well as hydrogen.

The first and second control signals are depending, in particular, on the determined difference of the received frequency value and the nominal frequency value.

Step c) is, for example, carried out before step d). Hence, the first control signal is, for example, sent before the second control signal. The control is, in particular, performed such that in a first step the storage facility is responding to a deviation between the actual frequency and the nominal frequency of the grid. Further, only in a second step, the hydrogen production facility or the renewable energy generation facility is responding to a deviation between the actual frequency and the nominal frequency of the grid.

In the case that the received frequency value is lower than the nominal frequency value (low-frequency event), the first control signal controls discharging of the storage facility for increasing the power output to the electrical grid by a first portion. Further, the second control signal is sent to the hydrogen production facility to control a reduction of the hydrogen production by a second portion.

In the case that the received frequency value is larger than the nominal frequency value (high-frequency event), the first control signal controls charging of the storage facility for reducing the power output to the electrical grid by a first portion. Further, the second control signal is sent to the renewable energy generation facility to control a reduction of the generation of electrical power for reducing the power output to the electrical grid by a second portion.

Furthermore, the control system may determine the first and second control signals based on input information from the renewable energy generation facility, the hydrogen production facility, and the storage facility. As examples for the input information, the control system may receive a value of the output power of the renewable energy generation facility, a value of the consumed power of the hydrogen production facility, and a value of the provided or consumed power of the storage facility.

According to an embodiment,
both of the first and the second control signals are control signals for causing an increase of the power output of the renewable hydrogen power plant, or
both of the first and the second control signals are control signals for causing a reduction of the power output of the renewable hydrogen power plant.

According to a further embodiment, it is determined in step b) that the received frequency value is lower than the nominal frequency value of the electrical grid. Further, the first control signal is sent to the storage facility to discharge the storage facility for increasing the power output to the electrical grid, and the second control signal is sent to the hydrogen production facility to reduce the hydrogen production for further increasing the power output to the electrical grid.

According to a further embodiment, it is determined in step b) that the received frequency value is larger than the nominal frequency value of the electrical grid. Further, the first control signal is sent to the storage facility to charge the storage facility for reducing the power output to the electrical grid, and the second control signal is sent to the renewable energy generation facility to reduce a generation of electrical power for further reducing the power output to the electrical grid.

According to a further embodiment, the renewable hydrogen power plant comprises a fuel cell facility, and the method comprises, after step c), the step of sending a third control signal depending on the received frequency value to the fuel cell facility to convert hydrogen into electrical power for increasing the power output to the electrical grid.

Having the fuel cell facility, hydrogen already produced by the renewable hydrogen power plant (and possibly stored in a hydrogen tank of the plant) can be re-converted into electricity to react to a low-frequency event of the electrical grid.

The fuel cell facility comprises one or more fuel cells. A fuel cell is an electrochemical device that converts the chemical energy of a fuel (e.g., hydrogen gas) and an oxidant to electrical energy, heat or other reaction products.

According to a further embodiment, it is determined in step b) that the received frequency value differs from the nominal frequency value by at least a predetermined threshold.

Thus, the power output of the renewable hydrogen power plant is adjusted only in the case of a significant difference (i.e., larger than the predetermined threshold) between the actual frequency (received frequency value) and the nominal frequency of the electrical grid. Hence, it can be taken into account that in practice, the exact frequency of the electrical grid varies around the nominal frequency due to a change in the balance between load and generation.

The predetermined threshold has, for example, a value of 0.1 Hz or smaller, 0.05 Hz or smaller, 0.02 Hz or smaller and/or 0.01 Hz or smaller.

According to a further embodiment, the renewable energy generation facility comprises a plurality of renewable energy generation units, the hydrogen production facility comprises a plurality of hydrogen production units, and/or the storage facility comprises a plurality of storage units. Moreover, the first control signal is sent to each storage unit, and the second control signal is sent to each renewable energy generation unit or to each hydrogen production unit.

In particular, a control system carrying out the method may include a dispatch logic unit for controlling the individual units of the facilities of the plant.

The plurality of renewable energy generation units comprise, for example, a plurality of (onshore and/or offshore) wind turbines and/or a plurality of photovoltaic elements.

According to a further embodiment, the first control signal causes an increase or a reduction of the power output of the renewable hydrogen power plant in a first time period by a first amount. Furthermore, the second control signal causes an increase or a reduction of the power output of the renewable hydrogen power plant in a second time period by a second amount. Preferably, the first time period is shorter than the second time period. Preferably, the first amount is equal to or larger than the second amount.

A ratio of the first and second amount may, for example, be 1/3 or more and/or 1/2 or more.

According to a second aspect, a computer program product is provided. The computer program product comprises a program code for executing the above-described method when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a control system for controlling a power output of a renewable hydrogen power plant is provided. The control system is configured for carrying out the above-described method.

According to a fourth aspect, a renewable hydrogen system is provided. The renewable hydrogen system comprises:
a renewable hydrogen power plant including:
   a renewable energy generation facility for generating electrical power,
   a hydrogen production facility for producing hydrogen from the generated electrical power, and
   a storage facility for storing the generated electrical power, and
the above-described control system.

The hydrogen production facility is, in particular, configured for producing hydrogen from a portion of the generated electrical power. Further, the storage facility is, in particular, configured for storing a portion of the generated electrical power.

According to an embodiment of the fourth aspect, the renewable hydrogen power plant comprises:
a terminal for electrical connection with an electrical grid, and
an electrical connecting unit electrically connecting the renewable energy generation facility, the hydrogen production facility, and the storage facility in common with the terminal.

Thus, the facilities of the renewable hydrogen power plant are connected to the electrical grid in common with a single power transmission. Hence, the power supply and loads of the individual facilities can be balanced before delivering the resulting power to the grid. In particular, the power supply and loads of the individual facilities can be balanced to provide an adjusted power output by the plant.

The electrical connecting unit includes, for example, a power transmission cable. The electrical connecting includes, for example, a connection bus.

According to a further embodiment of the fourth aspect, the renewable hydrogen power plant comprises a fuel cell facility for converting hydrogen into electrical power.

In this case, the electrical connecting unit may electrically connect the renewable energy generation facility, the hydrogen production facility, the storage facility and the fuel cell facility in common with the terminal of the renewable hydrogen power plant for electrical connection with the electrical grid.

According to a further embodiment of the fourth aspect, the renewable energy generation facility comprises one or more wind turbines, a wind farm, one or more photovoltaic units and/or a photovoltaic farm.

The wind turbine is an apparatus to convert the wind's kinetic energy into electrical energy (electrical power). The wind turbine comprises, for example, a rotor having one or more blades connected each to a hub, a nacelle including a generator, and a tower holding, at its top end, the nacelle. The tower of the wind turbine may be connected via a transition piece to a foundation of the wind turbine, such as a concrete foundation or a monopile in the seabed.

The wind turbine is, for example, an onshore wind turbine. The wind turbine may, however, also be an offshore wind turbine. Offshore includes marine environments as well as lakes and other open waters.

In embodiments of the fourth aspect, the one or more wind turbines each comprise a rotor with one or blades and a hub, the one or blades are rotatably connected by a pitch bearing to the hub for adjusting a pitch angle of the one or more blades. Further, the one or more wind turbines are configured for adjusting an amount of generated electrical power by adjusting the pitch angle of the one or more blades.

The respective entity, e.g., the control system, may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

The embodiments and features described with reference to the first aspect of the present invention apply mutatis mutandis to the other aspects (second to fourth aspects) of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a renewable hydrogen system comprising a renewable hydrogen power plant and a control system for controlling the power output of the renewable hydrogen power plant according to an embodiment;
Fig. 2 shows the renewable hydrogen power plant of Fig. 1;
Fig. 3 shows a further embodiment of a renewable hydrogen system;
Fig. 4 shows a flowchart illustrating a method for controlling the power output of a renewable hydrogen power plant according to an embodiment
Fig. 5 shows a diagram illustrating a control of the power output of the renewable hydrogen power plant of Fig. 1 in the case of a low-frequency event of an electrical grid, according to an embodiment; and
Fig. 6 shows a diagram similar as Fig. 5 but for the case of a high-frequency event of the electrical grid, according to an embodiment.

In the Figures, like reference numerals designate like or functionally equivalent elements, unless otherwise indicated.

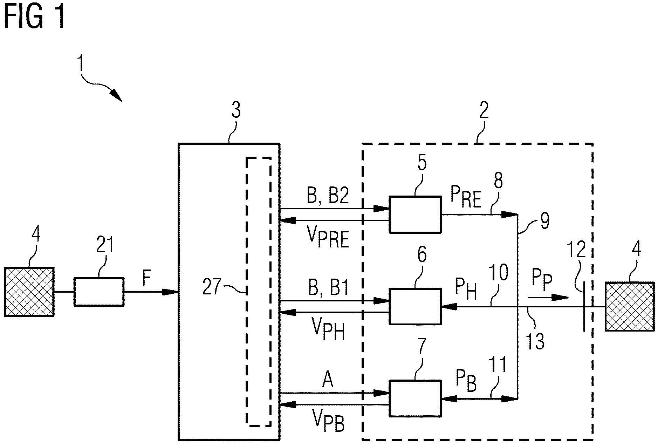

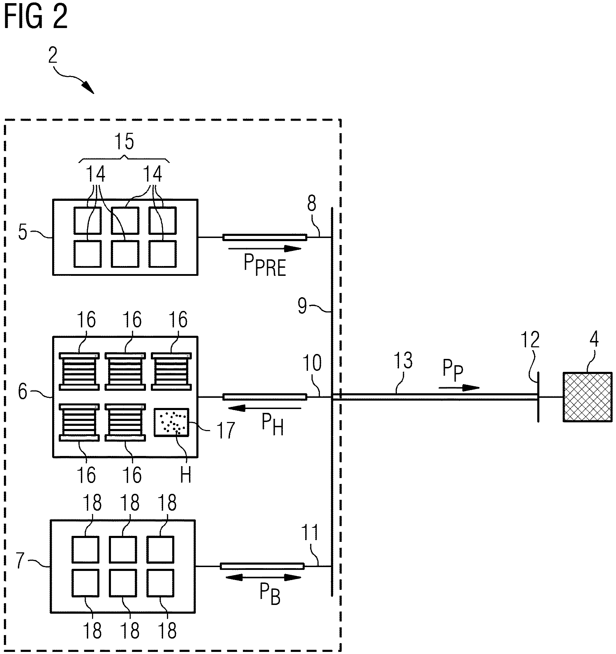

Fig. 1 shows a renewable hydrogen system 1 according to an embodiment. The renewable hydrogen system 1 comprises a renewable hydrogen power plant 2 for producing electrical power and hydrogen H (Fig. 2). The renewable hydrogen system 1 further comprises a control system 3 for controlling the power output P_{P} of the renewable hydrogen power plant 2 to an electrical grid 4.

The renewable hydrogen power plant 2 includes a renewable energy generation facility 5 for generating electrical power P_{RE}, a hydrogen production facility 6 for producing hydrogen H from (a portion of) the generated electrical power P_{RE}, and storage facility 7 for storing (a portion of) the generated electrical power P_{RE}.

The renewable hydrogen power system 1 further includes a power transmission connection 8 (e.g., one or more power transmission cables) for transmitting the power P_{RE} generated by the renewable energy generation facility 5 to a power balancing unit 9. The renewable hydrogen power system 1 further includes a power transmission connection 10 (e.g., one or more power transmission cables) for transmitting power P_{H} from the balancing unit 9 to the hydrogen production facility 6 for producing hydrogen H. The renewable hydrogen power system 1 includes in addition a power transmission connection 11 (e.g., one or more power transmission cables) for transmitting power P_{B} from the storage facility 7 to the balancing unit 9 (discharging of the storage facility 6) and for transmitting power P_{B} from the balancing unit 9 to the storage facility 7 (charging of the storage facility 7).

Hence, the renewable energy generation facility 5 acts as a power source to the balancing unit 9 and the hydrogen production facility 6 acts as a load to the balancing unit 9. Furthermore, the storage facility 7 can act as either a power source (discharging) or as a load (charging) to the balancing unit 9.

The balancing unit 9 is a power transmission unit (e.g., comprising one or more power transmission cables) electrically connecting the renewable energy generation facility 5, the hydrogen production facility 6 and the storage facility 7.

The renewable hydrogen power system 1 comprises a terminal 12 for electrical connection with the electrical grid 4. Hence, the terminal 12 is configured for feeding power P_{P} into the grid 4. The renewable hydrogen power system 1 further comprises an electrical connecting unit 13 connecting the balancing unit 9 with the terminal 12.

Fig. 2 shows a detail view of the renewable hydrogen power plant 2 according to an embodiment.

The renewable energy generation facility 5 of the plant 2 includes, for example, one or more wind turbines 14 for generating electrical power P_{RE}. The one or more wind turbines 14 may form a wind farm 15. In other examples, the renewable energy generation facility 5 may instead or in addition to wind turbines 14 or a wind farm 15 also comprise one or more photovoltaic elements and/or a photovoltaic farm (not shown).

As shown in Fig. 2, the hydrogen production facility 6 may include one or more hydrogen production units 16. The one or more hydrogen production units 16 may include electrolyzers for converting water by electrical power P_{H} into hydrogen H, e.g., into hydrogen gas H. The hydrogen production facility 6 may also include one or more hydrogen tanks 17 for temporarily storing the produced hydrogen H.

The storage facility 7 may include one or more storage units 18 for storing a portion of the electrical power P_{RE} generated by the renewable energy generation facility 5. The storage facility 7 is, in particular, configured for storing a portion of the electrical power P_{RE} generated by the renewable energy generation facility 5 in times when the electrical grid 4 is heavily loaded and a power output P_{P} of the plant 2 is reduced.

The control system 3 may, for example, also include a dispatch logic unit 27 (Fig. 1) for controlling the individual units 14, 16, 18 (Fig. 2) of the facilities 5, 6, 7 of the plant 2.

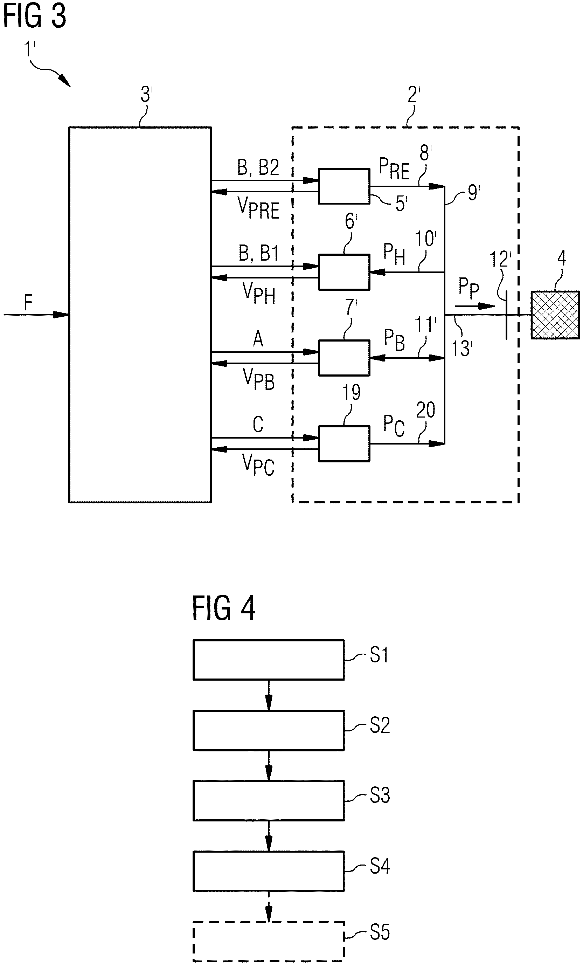

Fig. 3 shows another embodiment of a renewable hydrogen power system 1'. The renewable hydrogen power system 1' of Fig. 3 also comprises - similar as the renewable hydrogen power system 1 of Fig. 1 - a renewable hydrogen power plant 2', a control system 3', transmission connections 8', 10', 11' to a balancing unit 9', a terminal 12' for connection with the electrical grid 4 and an electrical connecting unit 13' connecting the balancing unit 9' to the terminal 12'.

Further, the renewable hydrogen power plant 2' of Fig. 3 also comprises - similar as the renewable hydrogen power plant 2 of Fig. 1 - a renewable energy generation facility 5', a hydrogen production facility 6', and a storage facility 7'.

The renewable hydrogen power system 1' of Fig. 3 differs from the renewable hydrogen power system 1 of Fig. 1 by that the renewable hydrogen power plant 2' comprises in addition to the facilities 5', 6', 7' also a fuel cell facility 19 for re-converting hydrogen H into electrical power P_{C}. The fuel cell facility 19 is fluidly connected (not shown) with the hydrogen production facility 6' for providing hydrogen H from a tank (e.g., tank 17 in Fig. 2) of the hydrogen production facility 6' to the fuel cell facility 19. The renewable hydrogen power system 1' (Fig. 3) further comprises a power transmission connection 20 for transmitting power P_{C} produced by the fuel cell facility 19 to the balancing unit 9'. In particular, the fuel cell facility 19 acts as a power source for the balancing unit 9'.

In the following, a method for controlling the power output P_{P} of a renewable hydrogen power plant 2 (Fig. 1) is described with reference to Figs. 4 to 6.

In a first step S1 of the method, the control system 3 (Fig. 1) receives a frequency value F of the electrical grid 4. The renewable hydrogen system 1 may, for example, comprise a frequency sensor 21 electrically connected to the electrical grid 4. The frequency sensor 21 is, in particular, configured for determining the current frequency F of the grid 4.

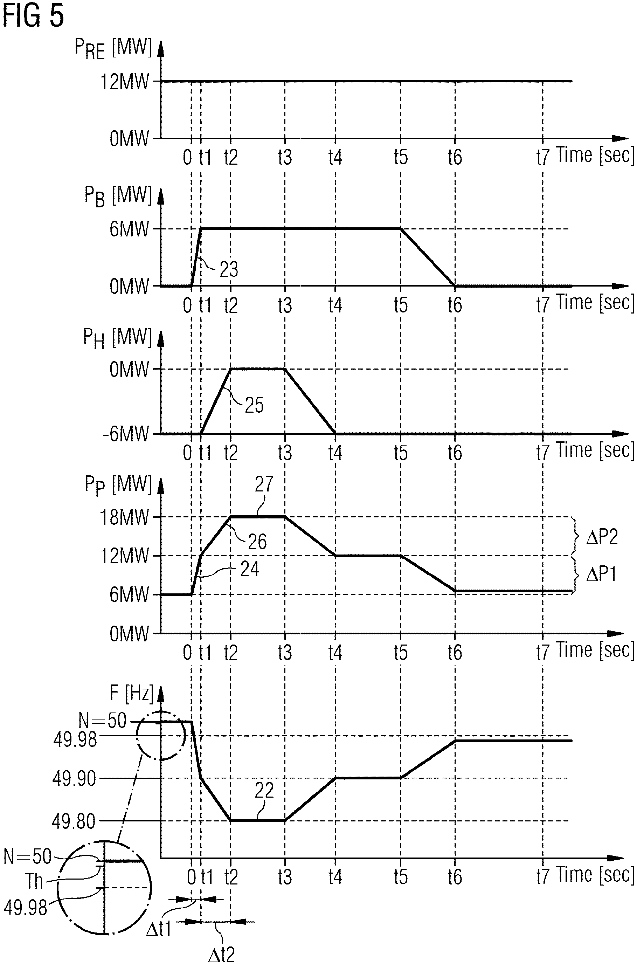

In a second step S2 of the method, the control system 3 determines that the received frequency value F differs from a nominal frequency value N (Fig. 5) of the electrical grid 4.

In particular, the control system 3 compares the received frequency value F with the nominal frequency value N of the electrical grid 4. Further, the control system 3 determines if the received frequency value F is lower or larger than the nominal frequency value N of the electrical grid 4.

For example, the control system 3 may apply a predetermined threshold Th (Fig. 5) when comparing the received frequency value F and the nominal frequency value N to determine if they differ significantly (more than the threshold Th) from each other.

In a third step S3 of the method, the control system 3 sends a first control signal A depending on the received frequency value F to the storage facility 7 to discharge or charge the storage facility 7.

For example, when it is determined in step S2 that the received frequency value F is (significantly) lower than the nominal frequency value N of the electrical grid 4 (low-frequency event), the first control signal A is sent to the storage facility 7 to discharge the storage facility 7 for providing a power supply P_{B} by the storage facility 7 and for increasing the power output P_{P} of the plant 2 to the electrical grid 4.

For example, when it is determined in step S2 that the received frequency value F is (significantly) larger than the nominal frequency value N of the electrical grid 4 (high-frequency event), the first control signal A is sent to the storage facility 7 to charge the storage facility 7 for providing a load and for decreasing the power output P_{P} of the plant 2 to the electrical grid 4.

In a fourth step S4 of the method, the control system 3 sends a second control signal B (B1, B2) depending on the received frequency value F to the hydrogen production facility 6 to reduce a production of hydrogen H or to the renewable energy generation facility 5 to reduce a generation of electrical power P_{RE}.

For example, when it is determined in step S2 that the received frequency value F is (significantly) lower than the nominal frequency value N of the electrical grid 4 (low-frequency event), the second control signal B (B1) is sent to the hydrogen production facility 6 to reduce the hydrogen production for further increasing the power output P_{P} of the plant 2 to the electrical grid 4.

For example, when it is determined in step S2 that the received frequency value F is (significantly) larger than the nominal frequency value N of the electrical grid 4 (high-frequency event), the second control signal B (B2) is sent to the renewable energy generation facility 5 to reduce a generation of electrical power P_{RE} for further reducing the power output P_{P} to the electrical grid 4.

Furthermore, the control system 3 may determine the first and second control signals A, B based on input information from the renewable energy generation facility 5, the hydrogen production facility 6, and the storage facility 7. For example, the control system 3 may receive a value of the output power V_{PRE} from the renewable energy generation facility 5. Further, the control system 3 may receive a value of the consumed power V_{PH} of the hydrogen production facility 6. Furthermore, the control system 3 may receive a value of the provided or consumed power V_{PB} of the storage facility 7. (In the embodiment of Fig. 3, the control system 3 may also receive a value of the provide power V_{PC} of the fuel cell facility 19.)

In Fig. 5, a response of the renewable hydrogen system 1 to a low-frequency event 22 of the electrical grid 4 is illustrated.

Fig. 5 shows a timely evolution of the power P_{RE} generated by the renewable hydrogen facility 5, the power P_{B} provided or consumed by the storage facility 7, and the power P_{H} consumed by the hydrogen production facility 6. Also shown in Fig. 5 is the timely evolution of the overall power P_{P} delivered by the renewable hydrogen plant 2 to the electrical grid 4. The overall power P_{P} is the sum of the power P_{RE}, the power P_{B} and the power P_{H}. All power values in Fig. 5 are given in the unit of Megawatt (MW).

In the lower-most panel of Fig. 5, the timely evolution of the frequency F of the electrical grid 4 is shown. The frequency F is given in the unit of Hertz (Hz).

The shown example illustrates a low-frequency event 22, in which the frequency F of the electrical grid 4 drops from the nominal value N of 50 Hz to a value of 49.8 Hz within the time span from t=0 to t2. Then, the frequency F recovers slowly within the time span from time t3 to t6.

During normal operation (before time t=0), the renewable energy generation facility 5 (e.g., a wind farm 15) produces, for example, 12 MW power output. Out of the 12 MW power output, for example, 6 MW are fed into the hydrogen production facility 6 for producing hydrogen H (P_{H} = - 6MV). The remaining 6 MW are fed into the grid 4 (P_{P} = 6 MW) .

During a low-frequency event 22, as shown in Fig. 5, the plant 2 reacts firstly by discharging the storage facility 7 in a first time span Δt1 from t=0 to t1. Discharging the storage facility 7 provides a fast reaction to regulate the frequency F of the grid 4. In Fig. 5, the discharging of the storage facility 7 is shown as an increase 23 of the power P_{B} from 0 MW to, for example, 6 MW. In this manner, an additional amount 24 of power of, for example, 6 MW is proved by the plant 2 to the grid 4.

The plant 2 further reacts in a second step by reducing the hydrogen production by the hydrogen production facility 6 in in a second time span Δt2 from t1 to t2. By reducing the hydrogen production, the hydrogen production facility 6 consumes less power P_{H}. In the shown example of Fig. 5, the hydrogen production is reduced to P_{H} = 0, that means no hydrogen H is produced from t2 to t3. In Fig. 5, the reduction of the hydrogen production is shown as an increase 25 of the power P_{H} from -6 MW to 0 MW. In this manner, an additional amount 26 of power of, for example, 6 MW is provided by the plant 2 to the grid 4.

Thus, the frequency drop 22 by the grid frequency F is fully balanced by adjusting the power output P_{P} of the plant 2. In the shown example, the power output P_{P} of the plant 2 is adjusted by adjusting the operation of the storage facility 7 and the hydrogen production facility 6. The operation of the renewable energy generation facility 5 (e.g., the wind farm 15) is not changed in the example of Fig. 5 (P_{RE} = 12 MW = constant).

The first and second time spans have, for example, each a value of 30 seconds or smaller, 20 seconds or smaller, 10 seconds or smaller, 5 seconds or smaller and/or 1 second or smaller. In addition or instead, a sum of the first and second time spans has a value of 40 seconds or smaller, 30 seconds or smaller and/or 20 seconds or smaller.

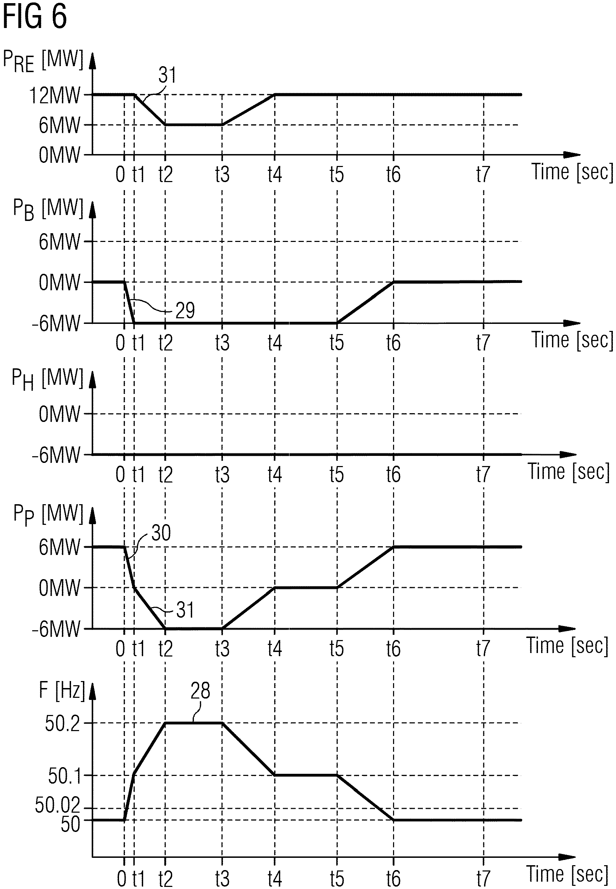

In Fig. 6, a response of the renewable hydrogen system 1 to a high-frequency event 28 of the electrical grid 4 is illustrated.

During the high-frequency event 28, as shown in Fig. 6, the plant 2 reacts firstly by charging the storage facility 7 in the time span from t=0 to t1. Charging the storage facility 7 provides a fast reaction to regulate the frequency F of the grid 4. In Fig. 6, the charging of the storage facility 7 is shown as a decrease 29 of the power P_{B} from 0 MW to, for example, - 6 MW. In this manner, the power P_{P} supplied to the grid 4 is reduced by an amount 30 of, for example, 6 MW.

The plant 2 further reacts in a second step by reducing the generation of power P_{RE} by the renewable energy generation facility 5 in the time span from t1 to t2. In the shown example of Fig. 5, the power generation P_{RE} is reduced from 12 MW to 6 MW. In this manner, the power P_{P} delivered to the grid 4, is reduced by an amount 31 of, for example, another 6 MW.

In the case of a renewable hydrogen power plant 2' (Fig. 3) comprising a fuel cell facility 19, the method may optionally comprise a fifth step S5.

In the optional fifth step S5 of the method, the control system 3' (Fig. 3) sends a third control signal C depending on the received frequency value F to the fuel cell facility 19 to convert hydrogen H into electrical power P_{C} for increasing the power output P_{P} to the electrical grid 4.

Thus, a frequency F of the electrical grid 4 can be quickly regulated by the renewable hydrogen power plant 2 by means of providing firstly an additional power or load by discharging or charging the storage facility 7 and by adjusting in a second step the generation of power P_{RE} and the production of hydrogen H.

Although the present invention has been described in accordance with preferred embodiments, it is obvious for the person skilled in the art that modifications are possible in all embodiments.

## Claims

1. A method for controlling a power output (P_{P}) of a renewable hydrogen power plant (2) to an electrical grid (4), the renewable hydrogen power plant (2) comprising a renewable energy generation facility (5), a hydrogen production facility (6), and a storage facility (7), and the method comprising the steps of:
a) receiving (S1) a frequency value (F) of the electrical grid (4),
b) determining (S2) that the received frequency value (F) differs from a nominal frequency value (N) of the electrical grid (4),
c) sending (S3) a first control signal (A) depending on the received frequency value (F) to the storage facility (7) to discharge or charge the storage facility (7), and
d) sending (S4) a second control signal (B) depending on the received frequency value (F) to the hydrogen production facility (6) to reduce a hydrogen production or to the renewable energy generation facility (5) to reduce a generation of electrical power (P_{RE}).

2. The method according to claim 1, wherein
both of the first and the second control signals (A, B) are control signals for causing an increase (24, 26) of the power output (P_{P}) of the renewable hydrogen power plant (2), or
both of the first and the second control signals (A, B) are control signals for causing a reduction (30, 31) of the power output (P_{P}) of the renewable hydrogen power plant (2).

3. The method according to claim 1 or 2, wherein it is determined in step b) that the received frequency value (F) is lower than the nominal frequency value (N) of the electrical grid (4), the first control signal (A) is sent to the storage facility (7) to discharge the storage facility (7) for increasing the power output (P_{P}) to the electrical grid (4), and the second control signal (B) is sent to the hydrogen production facility (6) to reduce the hydrogen production for further increasing the power output (P_{P}) to the electrical grid (4).

4. The method according to claim 1 or 2, wherein it is determined in step b) that the received frequency value (F) is larger than the nominal frequency value (N) of the electrical grid (4), the first control signal (A) is sent to the storage facility (7) to charge the storage facility (7) for reducing the power output (P_{P}) to the electrical grid (4), and the second control signal (B) is sent to the renewable energy generation facility (5) to reduce a generation of electrical power (P_{RE}) for further reducing the power output (P_{P}) to the electrical grid (4).

5. The method according to one of claims 1 - 4, wherein the renewable hydrogen power plant (2') comprises a fuel cell facility (19), and the method comprises, after step c), the step of sending (S5) a third control signal (C) depending on the received frequency value (F) to the fuel cell facility (19) to convert hydrogen (H) into electrical power (P_{C}) for increasing the power output (P_{P}) to the electrical grid (4).

6. The method according to one of claims 1 - 5, wherein it is determined in step b) that the received frequency value (F) differs from the nominal frequency value (N) by at least a predetermined threshold (Th).

7. The method according to one of claims 1 - 6, wherein:
the renewable energy generation facility (5) comprises a plurality of renewable energy generation units (14), the hydrogen production facility (6) comprises a plurality of hydrogen production units (16), and/or the storage facility (7) comprises a plurality of storage units (18),
the first control signal (A) is sent to each storage unit (18), and
the second control signal (B) is sent to each renewable energy generation unit (14) or to each hydrogen production unit (16).

8. The method according to one of claims 1 - 7, wherein
the first control signal (A) causes an increase (24, 26) or a reduction (30, 31) of the power output (P_{P}) of the renewable hydrogen power plant (2) in a first time period (Δt1) by a first amount (ΔP1),
the second control signal (B) causes an increase (24, 26) or a reduction (30, 31) of the power output (P_{P}) of the renewable hydrogen power plant (2) in a second time period (Δt2) by a second amount (ΔP2),
preferably the first time period (Δt1) is shorter than the second time period (Δt2), and
preferably the first amount (ΔP1) is equal to or larger than the second amount (ΔP2).

9. A computer program product comprising a program code for executing the method according to one of claims 1 - 8 when run on at least one computer.

10. A control system (3) for controlling a power output (P_{P}) of a renewable hydrogen power plant (2), the control system (3) being configured for carrying out the method according to one of claims 1 - 8.

11. A renewable hydrogen system (1), comprising:
a renewable hydrogen power plant (2) including:
a renewable energy generation facility (5) for generating electrical power (P_{RE}),
a hydrogen production facility (6) for producing hydrogen (H) from the generated electrical power (P_{RE}), and
a storage facility (7) for storing the generated electrical power (P_{RE}), and
a control system (3) according to claim 10.

12. The renewable hydrogen system according to claim 11, wherein the renewable hydrogen power plant (2) comprises:
a terminal (12) for electrical connection with an electrical grid (4), and
an electrical connecting unit (13) electrically connecting the renewable energy generation facility (5), the hydrogen production facility (6), and the storage facility (7) in common (9) with the terminal (12).

13. The renewable hydrogen system according to claim 11 or 12, wherein the renewable hydrogen power plant (2) comprises a fuel cell facility (19) for converting hydrogen (H) into electrical power (P_{C}).

14. The renewable hydrogen system according to one of claims 11 - 13, wherein the renewable energy generation facility (5) comprises one or more wind turbines (14), a wind farm (15), one or more photovoltaic units and/or a photovoltaic farm.
